# EUROPEAN PATENT APPLICATION

(11) **EP 1 990 139 A1**
(43) Date of publication of application: **12.11.2008**
(21) Application number: 07425265.1
(22) Date of filing: 08.05.2007
(51) Int. Cl.: B25J 15/02, B25J 15/08

(54) **Manipulator for gripping and clamping a workpiece**

(71) Applicant: ME.C.AL. S.p.A., 27030 Frascarolo (PV) (IT)
(72) Inventor: Cavezzale, Ennio, 27030 Frascarolo PV (IT)
(74) Representative: Simino, Massimo

(57) **Abstract**

A manipulator (1) for gripping and clamping a workpiece (2) comprises two jaws (10,11) movable relative to each other in a first direction (X-X) so as to clamp the workpiece (2) and movable in a second direction (Y-Y) perpendicular to the first direction (X-X) from and towards an operating position. In particular the operating position of one jaw (10) is adjustable independently of the operating position of the other jaw (11).

## Description

The present invention relates to a manipulator for gripping and clamping a workpiece in accordance with the preamble of Claim 1.

In particular, the present invention is applicable to the machining of workpieces such as profiled parts made of metal or plastic and also wood with widely varying cross-sections, transverse to their longitudinal axis, from tubular cross-sections with parallel sides to open cross-sections with sides at an angle relative to each other.

In accordance with the known art, these parts are deposited on a loading bench provided with manipulators for gripping and clamping the parts in the machining position and with means for moving them from a loading position into an unloading position, passing through one or more stations where apparatus for machining the parts are provided.

Manipulators for gripping workpieces are known and widely used, for example in order to grip aluminium and/or plastic sections for door or window frames.

In accordance with this known art, the manipulator comprises a support structure and two jaws which are mounted on the support structure and movable relative to each other in a horizontal direction so as to clamp the workpiece and in a vertical direction between a rest position and an operating position.

When it is required to clamp a workpiece, such as, for example, a section for door or window frames, the two jaws of the manipulator move in the vertical direction so as to be displaced from the rest position into the operating position. Then the two jaws move relative to each other in the horizontal direction so as to be positioned opposite the workpiece and so as to clamp the workpiece.

If the workpiece has an asymmetrical profile, the contact surface of one jaw, i.e. the surface of a jaw in contact with the workpiece, is larger than the contact surface of the other jaw. This difference in the contact surfaces of the two jaws results in a corresponding difference between the contact forces of the two jaws with a consequent instability in the gripping action of the manipulator on the workpiece.

It is also necessary to mention that, in modern loading benches, the asymmetrical workpieces are supported by support benches which are also asymmetrical so as to match the asymmetrical profile of the workpiece. In this case, if it is required to disengage the jaws of the manipulator from the workpiece in order to engage with another workpiece positioned parallel to the latter and therefore move the jaws horizontally, the jaws must be moved vertically by an amount sufficient to disengage them completely from the support benches. This requires extremely long jaw support arms with consequent less precision of the manipulator during the gripping operations and greater overall dimensions of the manipulator and the plant in which it is installed.

The above clearly illustrates the need to be able to have a manipulator for clamping a workpiece which allows a greater contact force to be applied onto the workpiece, also in the case of asymmetrical workpieces, and allows easier disengagement and horizontal movement of the jaws above the support benches.

The object of the present invention is therefore to propose a manipulator for clamping a workpiece which has characteristic features such as to satisfy the abovementioned requirement and at the same time overcome the drawbacks encountered in connection with the prior art.

This object is achieved by a manipulator for clamping a workpiece in accordance with Claim 1.

Owing to the possibility of adjusting the operating position of one jaw in the vertical direction independently of the operating position of the other jaw, the contact surfaces of the two jaws may vary independently of each other so as to allow the manipulator according to the present invention to perform more stable gripping of the workpieces, including asymmetrical workpieces, and move the jaws above the support benches. Owing to the independent movement of the two jaws, it is also possible to design the jaw support arms so that they are relatively short with consequent greater precision and smaller dimensions of the manipulator and the plant in which it is used.

Further characteristic features and advantages of the manipulator for clamping a workpiece according to the present invention will emerge from the description, given below, of a preferred example of embodiment, provided by way of a non-limiting example, with reference to the accompanying figures in which:

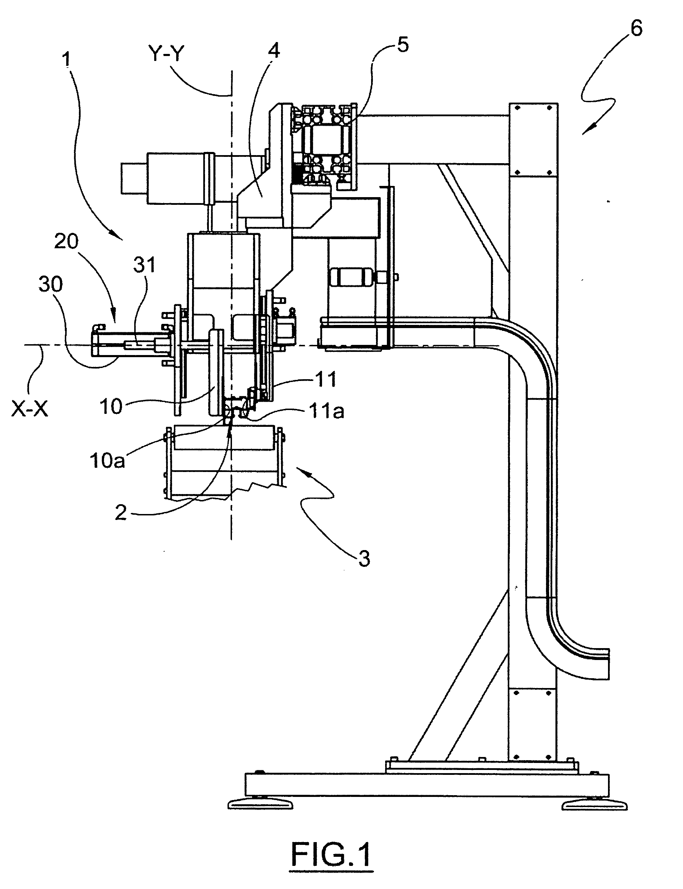

- Figure 1 shows a manipulator for gripping and clamping a workpiece in accordance with the present invention, in the configuration for clamping the workpiece;

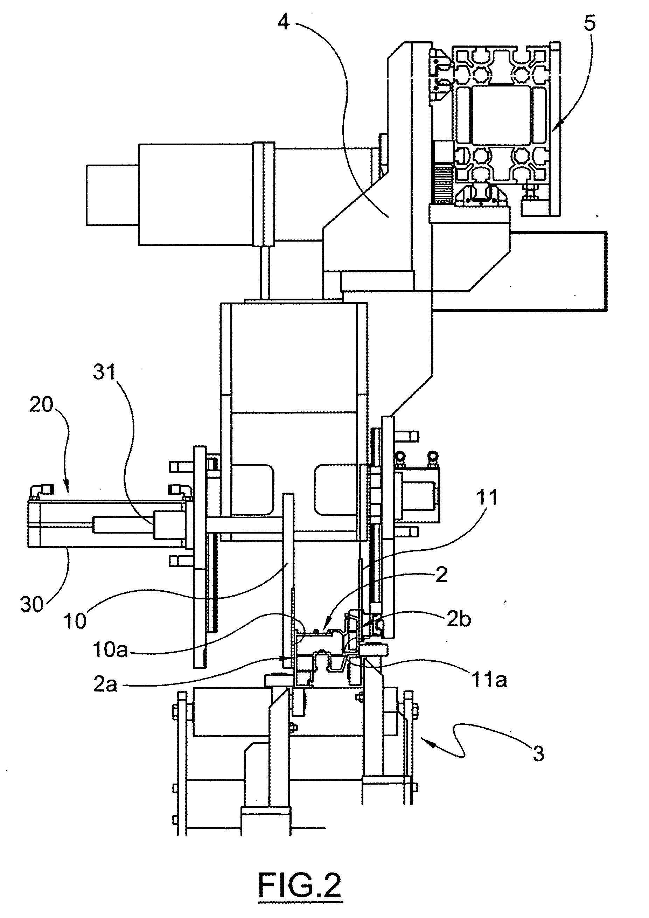

- Figure 2 shows in detail the manipulator according to Figure 1;
- Figure 3 shows the manipulator in the configuration disengaged from the workpiece;

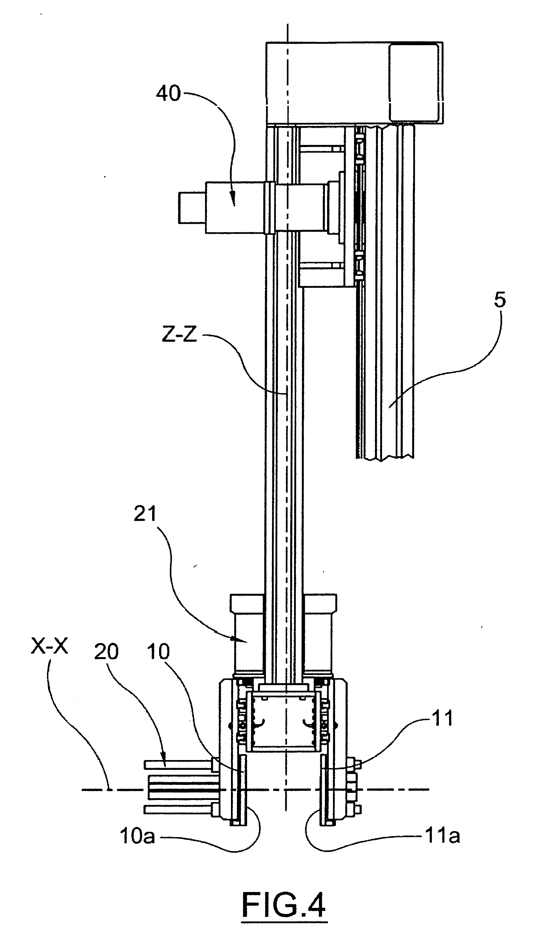

- Figure 4 shows a top plan view of the manipulator according to the present invention.

With reference to the accompanying figures, 1 denotes overall a manipulator for clamping a workpiece 2 according to the present invention.

In the following of the description of the present invention reference will be made in a non-limiting manner to a manipulator 1 for gripping and clamping a section 2, extending in the direction indicated by Z-Z. In particular, the manipulator 1 may be used for gripping and clamping metal, plastic or also wooden sections 2 on which it is required to perform various operations such as, for example, boring, milling, cutting and welding.

The section 2 is positioned on a conventional work bench (not shown in the figures) and supported by suitable support means, denoted overall by 3.

The manipulator 1 comprises a support structure 4 and two jaws 10,11 which are supported by the support structure 4. In the example shown in the accompanying figures, the support structure 4 is in turn supported slidably by a bar 5 extending along the axis Z-Z and connected to a load-bearing structure 6. In order to move the jaw unit 10,11 in the direction Z-Z, actuating means 40, of the pneumatic, hydraulic or electric type, are envisaged.

The two jaws 10,11 are movable relative to each other, in a first direction X-X, between a close gripping position, where they grip the workpiece 2 so as to clamp the workpiece 2, and a spaced apart position, where they are disengaged from the workpiece 2, and are movable in a second direction Y-Y perpendicular to the first direction X-X from and towards an operating position.

Advantageously, the two jaws 10,11 are movable relative to each other and independently in the first direction X-X so as to clamp the workpiece 2.

In the example shown in the figures, the direction X-X is a horizontal direction perpendicular to the direction Z-Z of longitudinal extension of the section 2, and the direction Y-Y is a vertical direction perpendicular to the two directions Z-Z and X-X.

Each jaw 10,11 has a contact surface 10a,lla, which is intended to bear against the section 2. In accordance with the embodiment shown in the accompanying figures, the contact surface 10a of the jaw 10 is intended to bear against the surface portion 2a of the workpiece 2, while the contact surface 11a of the jaw 11 is intended to bear against the surface portion 2b of the workpiece 2, facing to the surface portion 2a on the opposite side relative to the direction Z-Z of extension of the section 2.

In order to allow more stable gripping of the workpiece 2, the operating position of one jaw is adjustable independently of the operating position of the other jaw. Therefore, the operating position of the jaw 10, in the direction Y-Y, is adjustable independently of the operating position of the jaw 11 in the direction Y-Y, which is vertical in the example. Owing to the possibility of adjusting the operating position of one jaw in the vertical direction Y-Y independently of the operating position of the other jaw in this direction Y-Y, the surface portions 10a, 11a of the two jaws 10,11 in contact with the workpiece 2 may vary independently of each other so as to allow the manipulator 1 to perform mure stable gripping of the workpiece 2, in particular in the case where the workpiece is asymmetrical, as shown in the accompanying figures.

In other words, the jaws 10,11 are movable in the direction Y-Y independently of each other so as to adapt to the profile of the workpiece 2.

In accordance with one embodiment, one jaw, in the example the jaw 10, is movable from and towards the other jaw, in the example the jaw 11, in the first direction X-X so as to release and clamp the workpiece 2, respectively.

Alternatively, both the jaws 10,11 may be movable one from and towards the other one in the direction X-X so as to release and clamp the workpiece 2, respectively.

In accordance with an embodiment of the invention, each jaw 10,11 comprises a plate-shaped element extending perpendicularly with respect to the direction X-X of movement of the two jaws 10,11 towards and away from each other. In particular, the plate-shaped elements 10, 11 are arranged facing each other so as to clamp, in the close gripping position, the workpiece 2.

The manipulator 1 also comprises first actuating means, denoted overall by 20, for moving the jaws 10,11 in the horizontal direction X-X, and second actuating means, denoted overall by 21, for moving the jaws 10,11 in the vertical direction Y-Y.

In accordance with one embodiment, the actuating means 20 are pneumatic or hydraulic actuating means and comprise a cylinder 30 and two guide shafts 31, which have, slidably mounted inside them, a piston connected to the jaw 10 and able to be actuated pneumatically or hydraulically so as to move the jaw 10 in the direction X-X.

Alternatively, the actuating means 20 may also be electric.

In the same way, the actuating means 21 may be of the pneumatic, hydraulic or electric type. In particular, the actuating means 20 are able to adjust the operating position of one jaw, for example the jaw 10, independently of the operating position of the other jaw, i.e. the jaw 11.

In accordance with one embodiment, the actuating means 21 comprise two separate motors (not shown in the figures), each acting on a respective jaw 10,11.

Alternatively, in order to obtain the independent vertical adjustment of the two jaws 10,11, it is possible to envisage the movement of a plate which, operated by a pneumatic or hydraulic system, moves the two jaws 10,11 simultaneously in the vertical direction Y-Y and uses a mechanical stop with various stop positions in order to achieve the different vertical adjustment of one jaw with respect to the other jaw.

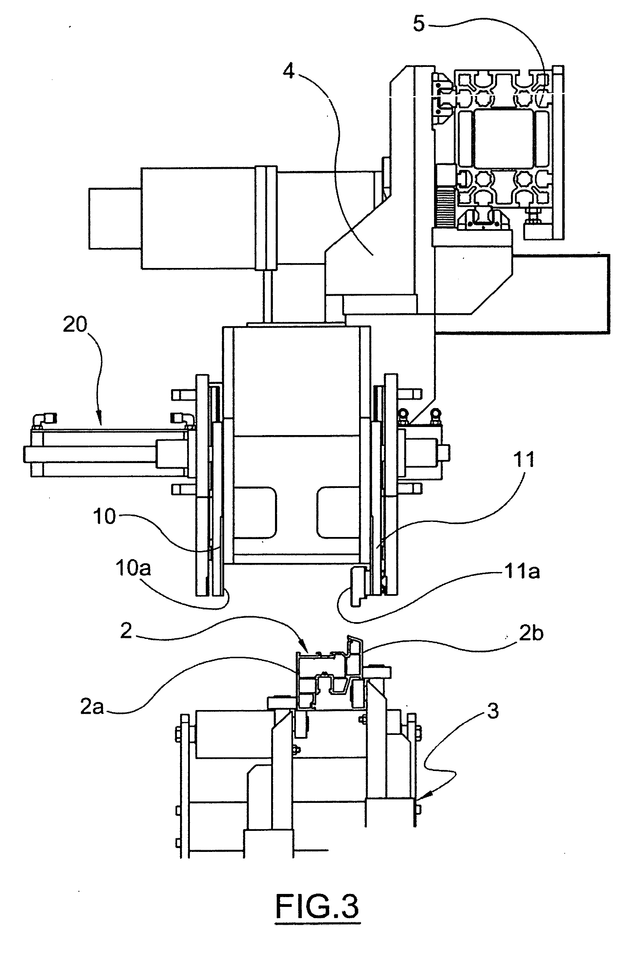

Below a method for gripping and clamping the workpiece 2 using the manipulator 1 according to the invention is described, assuming that the jaws 10,11 are in a rest position (Figure 3).

The method comprises the steps of:
a) moving the jaws 10,11 in the direction Y-Y from the rest position into the operating position, and
b) moving the jaws 10,11 relative to each other in the direction X-X closer together so as to bring them into contact against the workpiece 2 and thus clamp the workpiece 2.

In particular, the step a) comprises the step of adjusting the operating position of one jaw, in the example the jaw 10, independently of the operating position of the other jaw, in the example the jaw 11.

The adjustment of the operating position of the jaws 10,11 in the direction Y-Y, in the example the vertical direction Y-Y, is performed by means of the actuating means 21 able to move the jaws 10,11 in this direction Y-Y, while the subsequent movement of the jaw in the horizontal direction X-X is performed by means of the actuating means 20.

As can be understood from that described above, the manipulator according to the present invention allows the drawbacks mentioned with reference to the known art to be overcome.

In the case in question, owing to the adjustment of the operating position of one jaw in the vertical direction, independently of the operating position of the other jaw in this direction, the surfaces of the two jaws in contact with the workpiece may vary independently of each other so as to allow the manipulator to perform more stable gripping of the workpiece, in particular in the case where the workpiece is asymmetrical, and move the jaws above the support benches. Owing to the independent movement of the two jaws it is also possible to design jaw support arms so that they are relatively short with consequent greater precision and smaller dimensions of the manipulator and the plant in which it is used.

Obviously, a person skilled in the art, in order to meet unforeseen or specific requirements, may make numerous modifications and variations to the manipulator according to the invention described above, all of which moreover are contained within the scope of protection of the invention as defined by the following claims.

## Claims

1. Manipulator (1) for gripping and clamping a workpiece (2), comprising a support structure (4) and two jaws (10,11) supported by said support structure (4), said jaws (10,11) being movable relative to each other in a first direction (X-X) between a close gripping position, where said jaws grip a workpiece (2) so as to clamp the workpiece (2), and a spaced apart position, where said jaws are disengaged from the workpiece (2), and being movable in a second direction (Y-Y) perpendicular to said first direction (X-X) from and towards an operating position,
**characterized in that**
the operating position of one jaw (10) is adjustable independently of the operating position of the other jaw (11).

2. Manipulator (1) according to Claim 1, in which one jaw (10) is movable from and towards the other jaw (11) in said first direction (X-X) so as to release and clamp the workpiece (2), respectively.

3. Manipulator (1) according to Claim 1, in which both the jaws are movable one from and towards the other one in said first direction (X-X) so as to release and clamp the workpiece (2), respectively.

4. Manipulator (1) according to any one of Claims 1 to 3, in which said jaws (10,11) are movable in said second direction (Y-Y) one independently of the other one so as to adapt to the profile of the workpiece (2).

5. Manipulator (1) according to Claim 4, in which each jaw (10, 20) comprises a plate-shaped element extending perpendicularly with respect to said first direction (X-X), the plate-shaped elements (10,20) being arranged facing each other so as to clamp, in the close gripping position, the workpiece (2).

6. Manipulator (1) according to any one of Claims 1 to 5, comprising first actuating means (20) for moving at least one jaw (10,11) in said first direction (X-X) and second actuating means (21) for moving said jaws (10,11) in said second direction (Y-Y), said second actuating means (21) being able to adjust the operating position of one jaw (10) independently of the operating position of the other jaw (11).

7. Manipulator (1) according to Claim 6, in which said second actuating means (21) comprise two separate motors, each acting on a respective jaw (10,11).

8. Method for clamping a workpiece (2) by means of a manipulator (1) comprising a support structure (4) and two jaws (10,11) supported by said support structure (4), said jaws (10,11) being movable relative to each other in a first direction (X-X) between a close gripping position , where said jaws grip the workpiece (2) so as to clamp the workpiece (2), and a spaced apart position, where said jaws are disengaged from the workpiece (2), and being movable in a second direction (Y-Y) perpendicular to said first direction (X-X) from and towards an operating position, said method comprising the steps of:
a) moving said jaws (10,11) in said second direction (Y-Y) towards said operating position;
b) moving said jaws (10,11) relative to each other in said first direction (X-X) so as to bring them into contact against the workpiece (2) and clamp the workpiece (2) ;
**characterized in that**
said step a) comprises the step of adjusting the operating position of one jaw (10) independently of the operating position of the other jaw (11).
